Europäisches Patentamt

**European Patent Office**

Office européen des brevets

(11) Veröffentlichungsnummer: **0 233 332**
B1

(12) **EUROPÄISCHE PATENTSCHRIFT**

(45) Veröffentlichungstag der Patentschrift:
08.11.89

(21) Anmeldenummer: 86116278.2

(22) Anmeldetag: **24.11.86**

(51) Int. Cl.⁴: **F22B 37/28,** F01D 25/32,
B01D 45/16

(54) Hochgeschwindigkeitswasserabscheider.

(30) Priorität: **15.01.86  CH 131/86**

(43) Veröffentlichungstag der Anmeldung:
26.08.87 Patentblatt 87/35

(45) Bekanntmachung des Hinweises auf die Patenterteilung:
08.11.89 Patentblatt 89/45

(84) Benannte Vertragsstaaten:
BE CH DE ES FR IT LI NL SE

(56) Entgegenhaltungen:
EP-A- 0 096 916
FR-A- 321 682
GB-A- 1 066 872
GB-A- 1 072 483

(73) Patentinhaber: **BBC Brown Boveri AG, Haselstrasse,
CH-5401 Baden(CH)**

(72) Erfinder: **von Böckh, Peter, Dr., Selanderweg 152,
CH-5223 Riniken(CH)**

ACTORUM AG

## Beschreibung

Die vorliegende Erfindung betrifft einen Hochgeschwindigkeitswasserabscheider nach dem Oberbegriff des Patentanspruchs 1.

Solche Wasserabscheider haben in einem Dampfturbinenkraftwerk die Aufgabe, in einer Dampfleitung, insbesondere vor dem Niederdruckteil der Turbine, das im Dampf enthaltene Wasser abzuscheiden, da bei zu nassem Dampf die Wassertröpfchen schwere Erosionsschäden an der Beschaufelung verursachen könnten.

Wasserabscheider zu diesem Zweck sind beispielsweise aus den CH-Patentschriften 440 330 und 621 490 bekannt. Das Prinzip der Abscheidung beruht darauf, dass der Dampfstrom in einem Rohrkrümmer, in dessen Knickebene eine Reihe hohler gekrümmter Umlenkschaufeln vorgesehen ist, scharf, gewöhnlich um 90°, umgelenkt wird, wobei sich die Wassertröpfchen an den konkaven Schaufelseiten anlagern und der so gebildete Wasserfilm über Spalten an den Schaufelaustrittskanten und/oder an den konkaven Schaufelseiten in das hohle Schaufelinnere abgesaugt wird. Bei diesen Ausführungen kann es vorkommen, dass sich bei örtlich oder zeitlich grossem Wasseranfall ein Teil des Wasserfilms an den Spaltöffnungen staut und vom Dampfstrom in die Turbine mitgerissen wird.

Ein Wasserabscheider, der diesen Nachteil vermeidet, ist in der EP-Patentanmeldung 0 096 916 beschrieben. Bei diesem sind bei sonst gleicher Anordnung des Schaufelgitters an den konkaven Schaufelseiten zwei Reihen von Bohrungen vorhanden, eine in der Mitte und eine an der Austrittskante der Schaufeln, durch die ebenfalls der Wasserfilm in einen Raum niedrigeren Druckes abgesaugt wird. Um das Mitreissen des Wasserfilms zu vermeiden, sind Deckbänder vorgesehen, die sich in einem Abstand von den Bohrungsreihen über deren ganze Länge erstrecken und deren eine, in Strömungsrichtung gesehen, hintere Kante stromabwärts der Bohrungen mit der konkaven Seite der jeweiligen Schaufel dichtend verbunden sind, beispielsweise durch Schweissung, wogegen die vordere Kante mit der konkaven Schaufelseite einen Eintrittsspalt für den abgelagerten Wasserfilm bildet, durch den dieser in die vom Deckband und der konkaven Schaufelseite begrenzte lange, keilförmige Tasche gedrängt und dort über die Bohrungsreihen abgesaugt wird. Bei grösserem Wasseranfall staut sich der Wasserfilm in besagter langer Tasche, ohne das ein Teil des Wassers vom Dampf mitgerissen werden kann.

Die Saugwirkung an den Bohrungsreihen ergibt sich dadurch, dass der Innenraum der Umlenkschaufeln über ihre offenen Stirnseiten mit einem den obenerwähnten Rohrkrümmer umgebenden Aussengehäuse in Verbindung steht, in dem eine Trennung des Kondensats von Dampf, sogenanntem Transportdampf, stattfindet, der unvermeidlich mit dem Kondensat in dieses Aussengehäuse gerät und über einen Abdampfstutzen einer Stelle des Dampfkreislaufes zugeführt wird, an der ein niedrigerer Druck als an der konkaven Seite der Umlenkschaufeln herrscht.

Zur Abfuhr des erwähnten Transportdampfes an die Verwendungsstelle wird eine externe Rohrleitung benötigt. Es hat sich gezeigt, dass eine solche Rohrleitung in der Regel teurer ist als der Abscheider selbst. Dieser wirtschaftliche Gesichtspunkt spielt neuerdings bei Nachrüstungen bestehender Anlagen, d.h., Ersatz veralteter oder überholungsbedürftiger Abscheider durch solche neuerer und wirksamerer Bauart, eine Rolle, indem Kraftwerksbetreiber wegen der hohen Kosten der Rohrleitung eines Abscheiders der letztgenannten Bauart sich für eine insgesamt etwas billigere, wenn auch wirkungsgradmässig ungünstigere Sanierung des vorhandenen Wasserabscheiders entscheiden.

Die vorliegende Erfindung entstand aus der Aufgabe, die Nachteile der vorerwähnten, insbesondere der zuletzt genannten Bauart von Hochgeschwindigkeitswasserabscheidern zu vermeiden. D.h., es sollte ein Abscheider geschaffen werden, bei dem der Transportdampf innerhalb des Abscheiders selbst wieder dem Kreislauf des Arbeitsdampfes zugeführt wird. Die erwähnte Rohrleitung wird dadurch überflüssig, der Abscheider wesentlich billiger und daher auch für die Nachrüstung bestehender Anlagen preislich interessant.

Die Erfindung wird im folgenden anhand von in der Zeichnung dargestellten Ausführungsbeispielen erläutert.

In der Zeichnung stellen dar:

Fig. 1 in einem vertikalen Längsschnitt schematisch den Aufbau eines erfindungsgemässen Hochgeschwindigkeitswasserabscheiders,

Fig. 2 einen Querschnitt durch denselben gemäss dem in Fig. 1 eingetragenen Schnittverlauf II-II,

Fig. 3 die Verteilung des statischen Druckes an der Schaufeloberfläche, die

Fig. 4 und 5 zwei Ausführungen von Umlenkschaufeln, und die

Fig. 6 einen Schnitt durch die Schaufel nach Fig. 4 gemäss dem in dieser Figur eingetragenen Schnittverlauf VI-VI, wobei aber keine massstäbliche Uebereinstimmung zwischen diesen beiden Figuren besteht.

Die Pfeile in den verschiedenen Figuren deuten die Strömungsrichtung des Arbeitsmittels Dampf an. Dargestellt sind neben dem Gehäuse des Abscheiders nur die zum Verständnis der Erfindung wesentlichen Elemente und auch die örtliche Anordnung des Wasserabscheiders in der Dampfturbinenanlage ist nicht gezeigt. In der Regel sind Wasserabscheider der gegenständlichen Art zwischen dem Hoch- und dem Niederdruckteil der Anlage vorgesehen.

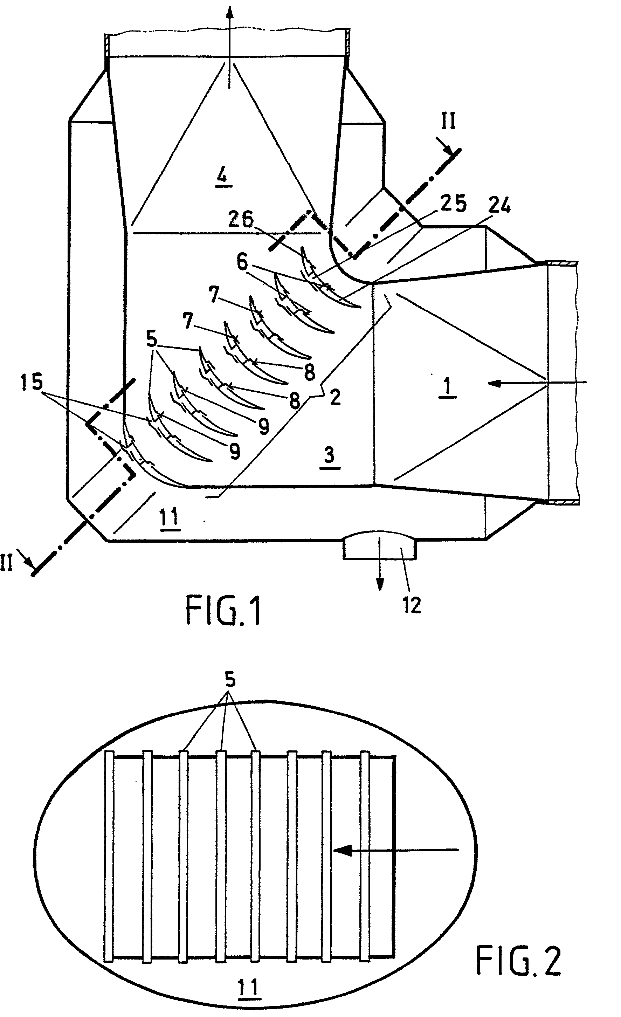

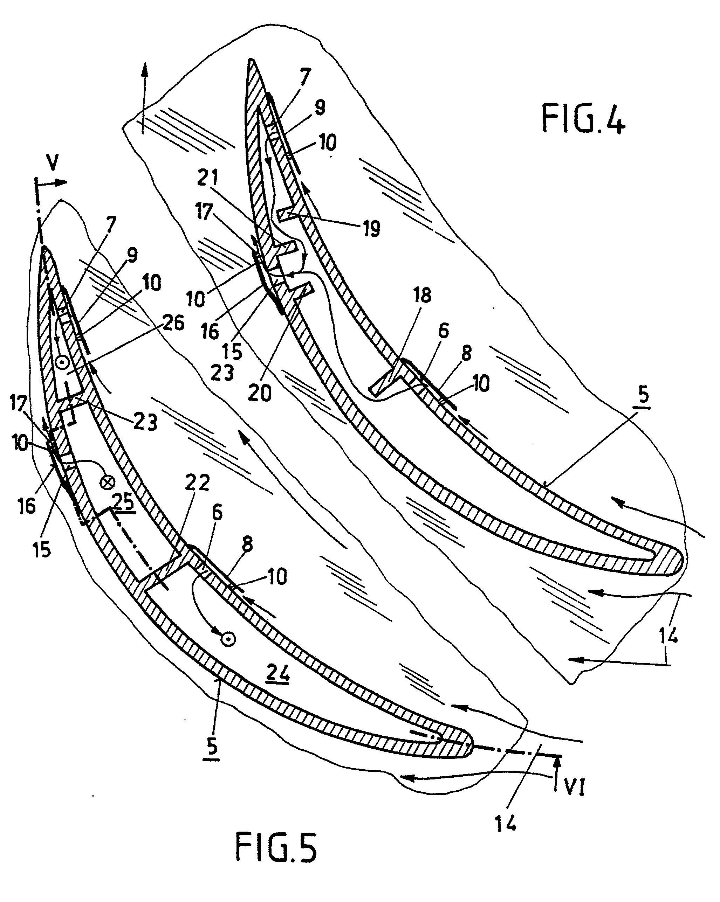

Gemäss Fig. 1 strömt der Dampf, bei dem es sich vor Niederdruckteil um Nassdampf handelt, durch eine horizontale Dampfzuleitung 1 in den Abscheider ein, wird nach Passieren eines Schaufelgitters 2 in einem Rohrknie 3 rechtwinklig nach oben in eine senkrechte Dampfaustrittsleitung 4 umgelenkt und strömt von dort der nicht dargestellten Turbine zu. Das Schaufelgitter 2 erstreckt sich in der Knickebene des Rohrknies 3 diagonal durch dasselbe und besteht aus einer Reihe von hohlen, kreisbogenprofilierten Umlenkschaufeln 5, an deren konkaver Druckseite in bekannter Weise im mittleren Bereich und im Endbereich, in Strömungsrichtung gesehen, je eine Reihe von Absaugöffnungen 6 bzw. 7 vorgesehen ist. Die Reihen der Absaugöffnungen 6 und 7 sind über ihre ganze Länge mit Deckbändern 8 und 9 überdeckt, deren hintere Kante, in Strömungsrichtung gesehen, mit der konkaven Schaufelseite dichtend verbunden ist, vorzugsweise durch Schweissung, und deren vorderer und über den Oeffnungen befindlicher durch Abstandshalter 10, siehe Fig. 4 und 5, in einem Abstand von der Schaufel fixiert ist, so dass der sich auf der konkaven Schaufelseite befindliche Kondensatfilm mit einem unvermeidlichen Anteil von Transportdampf in die so gebildete lange, keilförmige Rinne gedrückt und dort durch die Oeffnungen 6 bzw. 7 in das Schaufelinnere abgesaugt wird. Durch die beiden offenen Stirnseiten der Schaufeln 5 gelangt das Kondensat in ein Aussengehäuse 11, von wo es in bekannter Weise durch einen Wasserablaufstutzen 12 abgezogen und in einen Speisewasserbehälter zurückgeführt wird.

Der bisher beschriebene Aufbau entspricht dem Stand der Technik, wie er in der zuletzt zitierten Patentliteratur offenbart ist. Die Absaugung wird dort, wie eingangs erwähnt, dadurch erreicht, dass das Aussengehäuse 11 über eine Rohrleitung mit einer Stelle des Dampfkreislaufs in Verbindung steht, an der ein niedrigerer Druck herrscht als im Gehäuse 11. Da dieses über die beidseits offenen Stirnseiten der Umlenkschaufeln mit dem Schaufelhohlraum kommuniziert, wird das Wasser/Dampf-Gemisch in das Gehäuse 11 abgesaugt, wo sich das vom Dampf mitgerissene Wasser durch die Schwerkraft am Boden sammelt und durch den Wasserablaufstutzen 12 im Gehäuse 11 dem Speisewasser zugeführt wird, während der Dampf aus dem oberen Teil des Gehäuses durch die erwähnte Rohrleitung, die durch die vorliegende Erfindung entbehrlich werden soll, abgeführt wird.

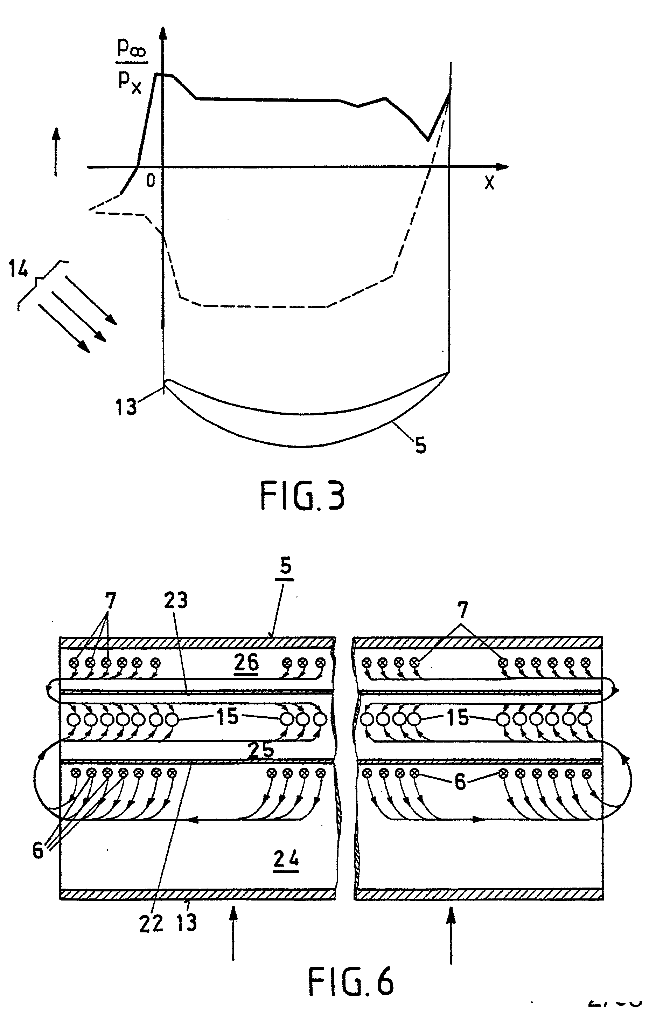

Gemäss der vorliegenden Erfindung wird als Quelle der Saugwirkung der Druckunterschied zwischen der konkaven und der konvexen Profilkontur der Umlenkschaufeln 5 benutzt. Fig. 3 zeigt als Funktion des Abstandes von der Profilvorderkante 13 die Druckverläufe an den beiden Profilkonturen, und zwar als Verhältnis $p_{oo}/p_x$, worin $p_{oo}$ den statischen Druck in der ungestörten Strömung ausserhalb des Störbereichs des Profils und $p_x$ den statischen Druck bedeuten. Die Anströmung wird durch die Strömungspfeile 14 angedeutet. Die voll ausgezogene Linie, die oberhalb der Abszisse verläuft, stellt den Ueberdruck gegenüber $p_{oo}$ an der konkaven Profilkontur und der strichlierte Verlauf unterhalb der Abszisse den an der konvexen Profilkontur herrschenden Unterdruck gegenüber $p_{oo}$ dar. Es handelt sich dabei um gerechnete Verläufe unter der Annahme von Reibungsfreiheit.

Der Druckunterschied zwischen der konkaven und der konvexen Profilkontur wird durch die in den Fig. 4 bis 6 gezeigten Massnahmen zur Absaugung und zur Trennung der Phasen Wasser-Dampf ausgenutzt. Bei der Ausführung nach Fig. 4, die einen Querschnitt durch eine Umlenkschaufel 5 zeigt, befindet sich auf der konvexen Schaufelsaugseite eine im Bereich zwischen den an der konkaven Schaufeldruckseite vorgesehenen Reihen von Absaugöffnungen 6 und 7 eine Reihe von Absaugöffnungen 15, die ebenfalls über die ganze Schaufellänge gleichmässig verteilt sind und ebenfalls von einem Deckband 16 abgedeckt sind, dessen Vorderkante, in Strömungsrichtung gesehen, auf der ganzen Länge mit der Schaufelsaugseite spaltfrei verbunden ist und dessen Hinterkante in einem Abstand von der Schaufelsaugseite liegt und mit dieser einen Spalt 17 bildet. Wie die druckseitigen Deckbänder 8 und 9 ist auch das saugseitige Deckband 16 durch eine Reihe von Abstandshaltern 10 in Form von Nieten oder Schrauben mit Distanzelement, Doppelnietzapfen oder dgl. zur Wahrung der Spaltbreite und zur Dämpfung von Schwingungsanregungen an der saugseitigen Schaufelwand befestigt. Der Querschnitt der saugseitigen Absaugöffnungen 15 sollte ungefähr gleich der Summe der Querschnitte der Absaugöffnungen 6 und 7 an der Druckseite sein, um einen Stau vor den ersteren zu vermeiden.

Die Ausführung nach Fig. 4 eignet sich speziell für Abscheider mit vertikalen Umlenkschaufeln. Dafür genügen über die ganze Schaufellänge sich erstreckende Umlenkrippen 18, 19 im Inneren der druckseitigen Wand und 20, 21 im Inneren der saugseitigen Wand. Sie lenken den abgesaugten Strom im Schaufelhohlraum um, wobei sich die Wassertropfen durch die Fliehkraft praktisch vollständig an den Innenbegrenzungsflächen niederschlagen und dieser Kondensatfilm nach unten in das Aussengehäuse 11 abfliesst, von wo das Kondensat durch den Wasserablaufstutzen abgezogen und dem Kreislauf wieder zugeführt wird.

Bei horizontaler Schaufelanordnung empfiehlt sich die Ausführung nach den Fig. 5 und 6 mit inneren Trennwänden 22 und 23, die den Schaufelhohlraum in drei voneinander separierte Kanäle 24, 25 und 26 unterteilen, die aber über ihre beidseitig offenen Stirnseiten und das Aussengehäuse 12 untereinander kommunizieren. Die Fig. 6 entspricht, allerdings nicht massstäblich, ungefähr dem in Fig. 5 eingetragenen Schnittverlauf VI-VI. Aus den Ansaugöffnungen 6 und 7 in der, von aussen gesehen konkaven Schaufelwand strömt das Wasser/Dampf-Gemisch in die Kanäle 24 und 26 und beidseitig spiegelbildlich nach aussen durch die Stirnseiten in das Aussengehäuse 11, von wo der Dampf allein, nachdem das Wasser teils in den Kanälen, teils im Aussengehäuse, ausgeschieden ist, ebenfalls spiegelbildlich in den mittleren Kanal 25 umgelenkt wird und durch die Ansaugöffnungen 15 in der saugseitigen Wand der Schaufel in den Hauptdampfstrom hinausgesaugt und über die Dampfaustrittsleitung 4 in die Turbine gelangt.

Am Dampfleitungsstrang 1-3-4 sind bei einem erfindungsgemässen Wasserabscheider demnach keine Aenderungen erforderlich. Von der diesem Abscheider im Aufbau am nächsten kommenden Bauart unterscheidet sich der vorliegende demnach im wesentlichen durch die Absaugöffnungen und das zugehörige Deckband an der Saugseite der Schaufel. Aus dieser scheinbar geringfügigen Modifikation resultiert aber der grosse Vorteil, dass die äussere Rohrleitung für die Abführung des Transportdampfes, was neben erheblich niedrigeren Anlagekosten auch geringere Wärme- und Strömungsverluste und somit einen höheren Gesamtwirkungsgrad der Anlage zur Folge hat.

Neben den in den Fig. 4 und 5 gezeigten Ausführungen der Umlenkschaufeln 5 mit nur einer Reihe von Absaugöffnungen 15 an der Saugseite sind auch solche mit zwei und mehr Reihen von Absaugöffnungen 15 möglich. Dies gilt analog auch für die Absaugöffnungen 6 und 7 an der Druckseite der Umlenkschaufeln. Dementsprechend müssten auch zusätzliche Trennwände bzw. Umlenkrippen im Schaufelinneren vorgesehen werden.

## Patentansprüche

1. Hochgeschwindigkeitswasserabscheider für eine Dampfkraftanlage, bei dem ein Aussengehäuse (11) ein Rohrknie (3) umschliesst, das mit einer Dampfeintrittsleitung (1) und einer Dampfaustrittsleitung (4) verbunden ist und in seiner Knickebene ein Schaufelgitter (2) mit hohlen Umlenkschaufeln (5) enthält, die eine konkave Druckseite und eine konvexe Saugseite aufweisen und so geformt sind, dass sie den aus der Dampfeintrittsleitung (1) ankommenden Dampf in die Dampfaustrittsleitung (4) umlenken, wobei die konkave Druckseite der Umlenkschaufeln (5) Reihen von Absaugöffnungen (6; 7) aufweist, die sich über die ganze Länge der Umlenkschaufeln (5) erstrecken und von je einem Deckband (8; 9) in einem zur Druckseite senkrechten Abstand überdeckt sind, welcher Abstand durch Abstandhalter (10) fixiert ist, wobei die stromaufwärtigen Kanten der Deckbänder (8; 9) mit der Druckseite einen gegen die Richtung der Dampfströmung gerichteten Absaugschlitz begrenzen und die stromabwärtigen Kanten der Deckbänder (8; 9) mit der Druckseite der Umlenkschaufeln (5) dichtend verbunden sind, und wobei die Absaugöffnungen (8; 9) über das hohle Schaufelinnere mit dem das Rohrknie (3) umschliessenden Aussengehäuse (11), das einen Wasserablassstutzen (12) für das abzuscheidende Kondensat aufweist, kommunizieren, dadurch gekennzeichnet, dass die konvexe Saugseite der Umlenkschaufeln (5) mindestens eine Reihe von Absaugöffnungen (15) aufweist, die mit dem Schaufelinneren kommunizieren und sich über die ganze Länge der Umlenkschaufeln (5) erstrecken und von je einem Deckband (16) in einem zur Saugseite senkrechten Abstand überdeckt sind, dass dieser Abstand durch Abstandhalter (10) fixiert ist, dass die stromabwärtigen Kanten der Deckbänder (16) einen Absaugespalt (17) begrenzen, dass die stromaufwärtigen Kanten der Deckbänder (16) mit der Saugseite dichtend verbunden sind, und dass im Schaufelinneren Leitelemente (18-21; 22, 23) vorhanden sind, die den Strömungsweg des durch die Absaugöffnungen (8; 9) an der Druckseite der Umlenkschaufeln (5) in das Schaufelinnere eingesaugten und durch die an der Saugseite befindlichen Absaugöffnungen (15) in die Dampfaustrittsleitung (4) hinausgesaugten Transportdampfes verlängern, um eine Kondensatausscheidung zu bewirken.

2. Hochgeschwindigkeitswasserabscheider nach Anspruch 1, dadurch gekennzeichnet, dass die Leitelemente zur Verlängerung des Strömungsweges des Transportdampfes Umlenkrippen (18-21) sind, die sich von den druckseitigen und den saugseitigen Schaufelwänden aus in das Schaufelinnere hinein und über die ganze Schaufellänge erstrecken.

3. Hochgeschwindigkeitswasserabscheider nach Anspruch 1, dadurch gekennzeichnet, dass die Leitelemente zur Verlängerung des Strömungsweges des Transportdampfes Trennwände (22, 23) sind, die sich über die ganze Schaufellänge erstrecken und das Schaufelinnere in eine Anzahl von Kanälen (24, 25, 26) unterteilen, deren Stirnseiten mit dem Aussengehäuse (11) kommunizieren.

## Claims

1. High-speed water separator for a steam power plant, in which an outer housing (11) surrounds a pipe elbow (3) which is connected to a steam-inlet (1) and a steam-exhaust line (4) and, in its bend plane, contains a blade row (2) having hollow deflection blades (5) which have a concave pressure side and a convex suction side and are formed such that they deflect the steam coming from the steam-inlet line (1) into the steam-exhaust line (4), with the concave pressure side of the deflection blades (5) having rows of suction openings (6; 7) which extend over the entire length of the deflection blades (5) and are covered in each case by a cover strip (8; 9) at a distance perpendicular to the pressure side, which distance is fixed by spacers (10), with the upstream edges of the cover strips (8; 9), with the pressure side, defining a suction slot directed against the direction of the steam flow, and the downstream edges of the cover strips (8; 9) being connected in a sealing manner to the pressure side of the deflection baldes (5), and with the suction openings (6; 7), via the hollow inside of the blade, communicating with the outer housing (11) which surrounds the pipe elbow (3) and has a water-drain connecting piece (12) for the condensate to be separated, characterized in that the convex suction side of the deflection blades (5) has at least one row of suction openings (15) which communicate with the inside of the blade and extend over the entire length of the deflection blades (5) and are covered in each case by a cover strip (16) at a distance perpendicular to the suction side, in that this distance is

fixed by spacers (10), in that the downstream edges of the cover strips (16) define a suction gap (17), in that the upstream edges of the cover strips (16) are connected in sealing manner to the suction side, and in that baffle elements (18–21; 22, 23) are present in the inside of the blade, which baffle elements (18–21; 22, 23), in order to separate the condensate, extend the flow path of the transport steam drawn the suction openings (6; 7) on the pressure side of the deflection blades (5) into the inside of the blades and drawn out into the steam-exhaust line (4) through the suction openings (15) located on the suction side.

2. High-speed water separator according to claim 1, characterized in that the baffle elements, for extending the flow path of the transport steam, are deflection ribs (18–21) which extend from the pressure-side and the suction-side blade and cover the entire blade length.

3. The high-speed water separator according to claim 1, characterized in that the baffle elements, for extending the flow path of the transport steam, are dividing walls (22, 23) which extend over the entire blade length and subdivide the inside of the blade into a number of channels (24, 25, 26), the end faces of which communicate with outer housing (11).

**Revendications**

1. Séparateur d'eau à grande vitesse pour une centrale électrique à turbine à vapeur, dans lequel un carter extérieur (11) entoure un coude de conduite (3), qui est raccordé à une conduite d'entrée de vapeur (1) et à une conduite de sortie de vapeur (4) et qui contient dans son plan de coudage une grille d'aubes (2) formée d'aubes déflectrices creuses (5), qui présentent une face antérieure concave et une face postérieure convexe et sont conformées de telle façon qu'elles dévient la vapeur provenant de la conduit d'entrée de vapeur (1) dans la conduite de sortie de vapeur (4), étant entendu que la face antérieure concave des aubes déflectrices (5) présente des rangées de lumières d'aspiration (6; 7) qui s'étendent sur toute la longueur des aubes déflectrices (5) et sont recouvertes chacune par une bande de recouvrement (8; 9) à une distance perpendiculaire à la face antérieure, cette distance étant fixée par des organes d'entretoisement (10), les bords des bandes de recouvrement (8; 9) situés en amont définissant avec la face antérieure une fente d'aspiration orientée dans un sens opposé au sens de l'écoulement de la vapeur et les bords des bandes de recouvrement (8; 9) situés en aval étant reliés de manière étanche à la face antérieure des aubes déflectrices (5), et les lumières d'aspiration (6; 7) communiquant, par l'intermédiaire de l'intérieur de l'aube creuse, avec le carter extérieur (11) entourant le coude de conduite (3), qui comporte un raccord de sortie d'eau (12) pour le condensat séparé, caractérisé en ce que la face antérieure convexe des aubes déflectrices (5) comporte au moins un rangée de lumières d'aspiration (15), qui communiquent avec l'intérieur des aubes, qui s'étendent sur toute la longueur des aubes déflectrices (5) et qui sont recouvertes chacune par une bande de recouvrement (16) disposée à une distance perpendiculaire de la face postérieure, que cette distance est fixée par des organes d'entretoisement (10), que les bords des bandes de recouvrement (16) situés en aval définissent un interstice d'aspiration (17), que les bords des bandes de recouvrement (16) situés en amont son reliés de manière étanche à la face postérieure, et que, à l'intérieure des aubes, des éléments de guidage (18 à 21; 22, 23) sont présents qui allongent le trajet d'écoulement de la vapeur de transport aspirée par les lumières d'aspiration (6; 7) situées sur la face antérieure des aubes déflectrices (5) à l'intérieur de ces aubes et évacuée dans la conduite de sortie de vapeur (4) par les lumières d'aspiration (15) situées sur la face postérieure, afin d'assurer une séparation du condensat.

2. Séparateur d'eau à grande vitesse suivant la revendication 1, caractérisé en ce que les éléments de guidage destinés à allonger le trajet d'écoulement de la vapeur de transport sont des nervures de déviation (18 à 21) qui s'étendent à partir des parois des aubes situées du côté antérieur et du côté postérieur, à l'intérieur des aubes et sur toute la longueur de celles-ci.

3. Séparateur d'eau à grande vitesse suivant la revendication 1, caractérisé en ce que les éléments de guidage destinés à allonger le trajet d'écoulement de la vapeur de transport sont des cloisons de séparation (22, 23) qui s'étendent sur toute la longueur des aubes et qui divisent l'intérieur des aubes en un certain nombre de canaux (24, 25, 26), dont les faces d'about communiquent avec le carter extérieur (11).

FIG.1

FIG.2

EP 0 233 332 B1

FIG.4

FIG.5

FIG.3

FIG.6